# EUROPÄISCHE PATENTSCHRIFT

(11) **EP 1 735 759 B1**
(45) Veröffentlichungstag und Bekanntmachung des Hinweises auf die Patenterteilung: **23.07.2014**
(21) Anmeldenummer: 05729775.6
(22) Anmeldetag: 05.04.2005
(51) Int. Cl.: G07F 7/10, G06K 19/07, G07C 9/00

(54) **DATENTRÄGER MIT TAN-GENERATOR UND DISPLAY**
DATA SUPPORT WITH TAN-GENERATOR AND DISPLAY
SUPPORT DE DONNEES A GENERATEUR DE TAN ET AFFICHAGE

(30) Priorität: 07.04.2004 DE 102004017152; 23.02.2005 DE 102005008258
(43) Veröffentlichungstag der Anmeldung: 27.12.2006
(73) Patentinhaber: Giesecke & Devrient GmbH, 81677 München (DE)
(72) Erfinder: GRAF, Hans, 83026 Rosenheim (DE); BODE, Eike, Thomas, 85625 Glonn (DE); STROBL, Werner, 81927 München (DE)
(86) Internationale Anmeldenummer: PCT/EP2005/003578
(87) Internationale Veröffentlichungsnummer: WO 2005/098764

(56) Entgegenhaltungen:
- WO-A-03/063099
- WO-A-03/084124
- DE-A1- 19 645 937
- GB-A- 2 275 654
- US-A- 5 060 263
- US-A- 5 937 068
- US-A1- 2001 003 445

## Beschreibung

Die Erfindung betrifft einen Datenträger, insbesondere eine Chipkarte, insbesondere eine Smart Card, mit einer Einrichtung zum Erzeugen von Einmal-Passwörtern.

Unter einer Smart Card wird eine Chipkarte mit einem Mikroprozessor bzw. einem Smart Card Controller verstanden. Im Zusammenhang mit der Erfindung wird im Allgemeinen, falls eine Smart Card mehrere Mikroprozessoren und/oder Controller-Schaltungen und/oder Logikschaltungen etc. hat, der Mikroprozessor etc., durch den die Hauptfunktionen der Smart Card steuerbar sind, als Mikroprozessor oder Smart Card Controller bezeichnet. Eventuelle Mikroprozessoren, Controller, Logikschaltungen etc., durch die Nebenfunktionen der Smart Card steuerbar sind, werden z.B. als System-Controller oder Steuerlogik bezeichnet.

Aus DE 198 41 886 C2 sind ein Verfahren und eine Prozessor-Chipkarte zum Erzeugen von Einmal-Passwörtern bekannt, sowie ein Verfahren zur Authentisierung eines Benutzers unter Verwendung eines Einmal-Passworts. Zur Berechnung eines ersten Passwortes wird als zu verschlüsselnder Klartext ein zufällig gewählter Anfangswert gewählt, der mit einer Verschlüsselungsfunktion fₖ und einem Schlüssel k verschlüsselt wird. Alle nachfolgenden Einmal-Passwörter werden durch erneute Anwendung der Verschlüsselungsfunktion fₖ auf das vorherige Einmal-Passwort berechnet, d.h. das vorherige Einmal-Passwort dient als Klartext für das nächste Eimnal-Passwort. Um für unterschiedliche Benutzer unterschiedliche Einmal-Passwörter und Serien von Einmal-Passwörtern erzeugen zu können, ist die Verschlüsselungsfunktion fₖ mit dem geheimen Schlüssel k des Benutzers der Prozessor-Chipkarte parametrisiert, der zur Verschlüsselung verwendet wird. Zum Authentisieren eines Benutzers durch den Rechner einer authentisierenden Stelle hat der Rechner der authentisierenden Stelle die Möglichkeit, das aktuell gültige Einmal-Passwort jedes Benutzers zu bestimmen und dem Benutzer zuzuordnen. Der Benutzer sendet sein aktuell gültiges Einmal-Passwort an den Rechner der authentisierenden Stelle, der das Einmal-Passwort mit dem beim Rechner bestimmten Einmal-Pässwort vergleicht und den Benutzer nur dann authentisiert, wenn die beiden Einmal-Passwörter übereinstimmen.

DE 198 41 886 C2 beschreibt weiter die Verwendung eines solchen Einmal-Passworts und Authentisierungsverfahrens bei einer Chipkarte, insbesondere einer EC-Karte mit Chip, in dem der geheime Schlüssel k des Benutzers abgespeichert ist, der Inhaber der EC-Karte ist. Eine alternative in DE 198 41 886 C2 beschriebene Verwendung sieht vor, dass als Chipkarte eine in einem Mobiltelefon eingesetzte Chipkarte verwendet wird, wobei das Mobiltelefon als Lesegerät für die Chipkarte verwendet wird.

In US 6,067,621 sind eine weitere Vorrichtung und ein weiteres Verfahren zum Erzeugen von Einmal-Passwörtern beschrieben, sowie ein Verfahren zur Benutzerauthentisierung. Dort ist ein geheimer Schlüssel für die Erzeugung von Einmal-Passwörtern auf einer IC-Karte eines Benutzers abgespeichert. Ein tragbares Terminal des Benutzers liest den geheimen Schlüssel aus der IC-Karte aus, erzeugt eine Zufallszahl und erzeugt unter Verwendung des ausgelesenen geheimen Schlüssels und der erzeugten Zufallszahl ein Einmal-Passwort. Das erzeugte Einmal-Passwort lässt sich auf einem Display des tragbaren Terminals anzeigen. Zur Erzeugung eines unterschiedlichen Einmal-Passworts wird im Terminal eine unterschiedliche Zufallszahl erzeugt und verwendet. Zur Authentisierung des Benutzers sendet der Benutzer das in seinem tragbaren Terminal erzeugte Einmal-Passwort an einen Server. Der Server hat den geheimen Schlüssel und die Zufallszahl des Benutzers ebenfalls zur Verfügung, berechnet das Einmal-Passwort selbst, vergleicht das selbst berechnete Einmal-Passwort und das vom Benutzer erhaltene Einmal-Passwort und authentisiert den Benutzer, wenn die beiden Einmal-Passwörter übereinstimmen.

Die in DE 198 41 886 C2 und US 6,067,621 beschriebenen Vorrichtungen benutzen ein gesondertes Terminal mit Display als Lesegerät für die bei der Passworterzeugung verwendete Chipkarte, um das erzeugte Einmal-Passwort anzuzeigen. Bei Vorrichtung und Verfahren aus US 6,067,621 ist das Terminal sogar zudem zum Berechnen des Einmal-Passworts erforderlich. Damit haben die beiden bekannten Vorrichtungen den Nachteil, dass das Terminal stets mitgeführt werden muss. Dies macht die Handhabung der Vorrichtungen umständlich.

Aus US 5937068, US 5060263 und WO 03/063099 sind Chipkarten bekannt, die Einmal-Passwörter erzeugen und anzeigen.

Einmal-Passwörter werden beispielsweise bei gesicherten elektronischen Zahlungsverkehr-Transaktionen, z.B. Überweisungen, beim Homebanking über das Internet verwendet. Das Einmal-Passwort wird hierbei als Transaktionsnummer (TAN) bezeichnet. Zur Tätigung einer gesicherten elektronischen Zahlungsverkehr-Transaktion, z.B. einer Online-Überweisung über das Internet, veranlasst der Inhaber eines Kundenkontos, insbesondere Bankkontos, bei einem Kreditinstitut, die Zahlungsverkehr-Transaktion, z.B. indem er Eingaben in einem elektronischen Überweisungsformular macht und das elektronische Überweisungsformular auf elektronischem Weg an das Kreditinstitut sendet. Damit die Zahlungsverkehr-Transaktion ausgeführt wird, muss sie noch mit einer Transaktionsnummer (TAN) bestätigt werden. Die verwendbaren Transaktionsnummern (TANs) werden dem Inhaber des Kundenkontos (Kontoinhaber) üblicherweise in Form von Listen auf Papier mit der Post zugesandt. Der Kontoinhaber liest eine Transaktionsnummer (TAN) von der Liste ab und sendet sie auf elektronischem Weg an das Kreditinstitut. Hierdurch bestätigt der Kontoinhaber die Zahlungsverkehr-Transaktion und bewirkt somit, dass die Zahlungsverkehr-Transaktion ausgeführt wird. Gelangt ein Unbefugter an die TAN-Liste eines Kontoinhabers, z.B. indem er die Liste auf dem Postweg abfängt, und an die Zugangs-Kennung für das Online-Banking (Homebanking), kann er über das Kundenkonto des Kontoinhabers Transaktionen ausführen.

Auf dem technischen Gebiet der elektronischen Geldbörsen ist es bereits bekannt, Smart Cards (Mikroprozessor-Chipkarten), deren Smart Card Controller (Mikroprozessor) als Geldbörsenchip mit der Funktion einer elektronischen Geldbörse dient, mit einem Display zu versehen, auf dem sich der Guthabenstand im Geldbörsenchip anzeigen lässt. Problematisch bei diesen Smart Cards mit Display ist, dass der Smart Card Controller einen hohen Stromverbrauch hat. Andererseits besteht der Bedarf, das Guthaben so lange auf dem Display anzuzeigen, dass es ein Benutzer problemlos vom Display ablesen kann.

DE 100 35 094 A1 beschreibt eine Smart Card mit einem Smart Card Controller, einem Speicher, einem Display, einem System-Controller (Display-Steuerlogik, Ansteuerlogik) für das Display und einer Energiequelle (z.B. Batterie). Der Speicher ist mittels des System-Controllers (Display-Steuerlogik) unabhängig vom Smart Card Controller betreibbar. Der Smart Card Controller wird als Geldbörsenchip einer elektronischen Geldbörse verwendet und enthält ein elektronisches Guthaben, das mittels eines Terminals (Chipkarten-Lesegerät) durch Transaktionen verringert und erhöht werden kann. Durch eine Überweisungs-Transaktion von einem Bankkonto auf den Geldbörsenchip wird das Guthaben des Geldbörsenchips erhöht. Durch eine Überweisungs-Transaktion von dem Börsenchip auf ein externes Bankkonto oder einen externen elektronischen Geldspeicher wird das Guthaben des Geldbörsenchips verringert. Die Kontaktierung zwischen der Chipkarte und dem Terminal erfolgt z.B. über Kontakte für kontaktbehaftete Kontaktierung. Der Smart Card Controller, der einen wesentlich höheren Stromverbrauch hat als der System-Controller (Display-Steuerlogik) für das Display, wird über das externe Terminal mit Energie versorgt Da während der Benutzung des Smart Card Controllers, d.h. z.B. zur Erhöhung oder Verringerung des Guthabens im Geldbörsenchip, ohnehin eine Verbindung zwischen dem Terminal und der Chipkarte besteht, bedeutet es keinen Zusatzaufwand, den Smart Card Controller durch das Terminal mit Energie zu versorgen. Der System-Controller und das Display werden dagegen über die interne Energiequelle der Smart Card mit Energie versorgt. Daten aus dem Smart Card Controller, beispielsweise das Guthaben der elektronischen Geldbörse, die auf dem Display angezeigt werden sollen, werden, solange die Smart Card mit dem Terminal verbunden ist, in den Speicher abgespeichert. Anschließend können die Daten unter Verwendung der internen Energiequelle und mit Hilfe der Display-Steuerlogik auf dem Display angezeigt werden, ohne dass dazu ein Terminal erforderlich ist.

Eine weitere als elektronische Geldbörse eingerichtete Smart Card mit einem Display zum Anzeigen des Guthabenstands der elektronischen Geldbörse ist in WO 03/030396 und DE 101 47 140 A1 beschrieben.

Aufgabe der Erfindung ist es, einen besonders einfach zu handhabenden Datenträger, insbesondere eine Chipkarte, insbesondere Smart Card, mit einer Einrichtung zum Erzeugen und Anzeigen von Einmal-Passwörtern zu schaffen.

Die Aufgabe wird gelöst durch einen Datenträger nach dem unabhängigen Vorrichtungsanspruch und durch ein Verfahren nach dem unabhängigen Verfahrensanspruch. Vorteilhafte Ausgestaltungen der Erfindung sind in den abhängigen Ansprüchen angegeben.

Der erfindungsgemäße Datenträger gemäß dem unabhängigen Anspruch 1 hat eine Einrichtung zum Erzeugen von Einmal-Passwörtern und zusätzlich ein Display zum Anzeigen von erzeugten Einmal-Passwörtern. Aus diesem Grund lässt sich mit dem Datenträger ein erzeugtes Einmal-Passwort ohne Zuhilfenahme eines Hilfsmittels, z.B. eines Terminals oder Lesegeräts, direkt auf dem Datenträger anzeigen.

Daher ist gemäß Anspruch 1 ein sehr einfach zu handhabender Datenträger mit einer Einrichtung zum Erzeugen von Einmal-Passwörtern geschaffen.

Der unabhängige Anspruch 20 gibt ein Verfahren zum Betreiben des Datenträgers an, insbesondere ein Verfahren zum Erzeugen von Einmal-Passwörtern. Ansprüch 28 gibt die Verwendung des Datenträgers bzw. des Betriebsverfahrens zur Bestätigung einer gesicherten elektronischen Zahlungsverkehr-Transaktion an. Weitere, in Anspruch 29 angegebene Verwendungen sind die Authentisierung eines Inhabers des Datenträgers mit dem Datenträger bzw. mit dem Betriebsverfahren.

In dem Datenträger ist vorzugsweise mindestens ein Einmal-Passwort abgespeichert.

Vorzugsweise ist der Datenträger, insbesondere dem Format nach, eine flache Chipkarte, die den zusätzlichen Vorteil hat, dass sie sich besonders einfach handhaben lässt, beispielsweise, weil sie wie eine gewöhnliche Chipkarte in einem Geldbeutel transportiert werden kann. Die Chipkarte hat einen Kartenkörper, der nicht-standardgemäß oder standargegemäß sein kann, z.B. gemäß ISO 7810 ID-1 oder ID-00 oder ID-000.

Die Einrichtung zum Erzeugen von Einmal-Passwörtern kann beispielsweise ein dazu eingerichteter Mikroprozessor sein, insbesondere ein TAN-Generator zum Erzeugen von Transaktionsnummern (TANs) für den gesicherten elektronischen Zahlungsverkehr. Wahlweise sind in dem Mikroprozessor weitere Funktionen implementiert.

Wahlweise ist der Mikroprozessor mit Funktionen eines Smart Card Controllers so eingerichtet, dass der Datenträger eine Multifunktions-Smart-Card ist, insbesondere eine Multifunktions-Smart-Card auf Java-Basis, insbesondere eine Java Card.

Das erzeugte Einmal-Passwort ist gemäß einer bevorzugten Ausführungsform eine Transaktionsnummer (TAN) zum Abwickeln einer gesicherten elektronischen Zahlungsverkehr-Transaktion über ein einem Inhaber des Datenträgers zugeordnetes Kundenkonto.

Bei einer Verwendung dieser bevorzugten Ausführungsform der Erfindung erzeugt der Inhaber mit seinem Datenträger eine Transaktionsnummer (TAN), liest sie vom Display ab und gibt die abgelesene Transaktionsnummer in eine Transaktionseinrichtung zum Tätigen von elektronischen Zahlungsverkehr-Transaktionen ein, beispielsweise in ein Transaktionsterminal bei einem Kreditinstitut (Bank, Sparkasse), oder beim Homebanking in den eigenen Computer und von dort über das Internet schließlich an einen Transaktionsserver eines Kreditinstituts.

Vorzugsweise hat der Datenträger weiter die Funktion einer Zahlungsverkehrkarte, z.B. einer ec-Karte oder einer Kreditkarte, in der Informationen in Bezug auf ein einem Inhaber des Datenträgers zugeordnetes Kundenkonto und/oder Funktionalitäten zum Abwickeln von gesicherten elektronischen Zahlungsverkehr-Transaktionen über das Kundenkonto implementiert sind.

Diese Ausführungsform hat den weiteren Vorteil, dass zum Erzeugen des Einmal-Passworts ein Datenträger verwendet wird, den der Inhaber des Datenträgers ohnehin schon mit sich führt, nämlich seine ec-Karte oder Kreditkarte oder sonstige ähnliche Zahlungsverkehrkarte.

Besonders bevorzugt ist diese Ausführungsform in Verbindung damit, dass das erzeugte Einmal-Passwort eine Transaktionsnummer (TAN) zum Abwickeln einer gesicherten elektronischen Zahlungsverkehr-Transaktion über ein einem Inhaber des Datenträgers zugeordnetes Kundenkonto ist. In diesem Fall beginnt der Inhaber eines Kundenkontos, beispielsweise eines Girokontos bei einem Kreditinstitut, und einer zum Kundenkonto gehörigen Zahlungsverkehrkarte (ec-Karte oder Kreditkarte etc.) mit seiner Zahlungsverkehrkarte eine Transaktion auf übliche Weise. Beim Homebanking an seinem Computer beginnt der Konto- und Karteninhaber die Transaktion beispielsweise durch entsprechende Eingaben in eine Eingabemaske auf dem Bildschirm des Computers. Die Transaktion soll nun noch durch den Konto- und Karteninhaber bestätigt und dadurch zur Ausführung freigegeben werden. Gemäß der bevorzugten Ausfühmzngsform der Erfindung erzeugt der Inhaber die Transaktionsnummer TAN mit derselben Zahlungsverkehrkarte, mit der er die Transaktion begonnen hat, liest die Transaktionsnummer TAN vom Display der Zahlungsverkehrkarte ab und gibt die TAN in seinen Computer ein. Ein umständlicher, kostspieliger und unsicherer Versand von Transaktionsnummern (TANs) mit der Post ist nicht erforderlich. Folglich ist der Datenträger gemäß der bevorzugten Ausführungsform besonders einfach zu handhaben und zusätzlich besonders sicher.

Wahlweise hat der Datenträger alternativ oder zusätzlich die Funktion einer elektronischen Geldbörse (GELDKARTE). In diesem Fall ist vorzugsweise das Display (auch) zum Anzeigen von Informationen der elektronischen Geldbörse eingerichtet, insbesondere zum Anzeigen des aktuellen Guthabenstandes der elektronischen Geldbörse. Das Display erlaubt somit sowohl die Anzeige eines erzeugten Einmal-Passworts als auch die Anzeige des Guthabenstands oder sonstiger Informationen der elektronischen Geldbörse.

Dabei weist der Datenträger weiter eine zum Ansteuern des Displays eingerichtete Display-Steuerlogik auf, z.B. einen an sich bekannten Display-Treiber. Weiter ist die Display-Steuerlogik von der Einrichtung zum Erzeugen von Einmal-Passwörtern unabhängig betreibbar, wodurch insbesondere erreicht wird, dass zum Anzeigen eines erzeugten Einmal-Passworts auf dem Display die Einrichtung zum Erzeugen von Einmal-Passwörtern außer Betrieb sein kann. Dies ist vorteilhaft, da die Display-Steuerlogik einen erheblich geringeren Leistungsverbrauch (Energieverbrauch pro Zeit) oder Stromverbrauch hat als die Einrichtung zum Erzeugen von Einmal-Passwörtern. Daher braucht die Einrichtung zum Erzeugen von Einmal-Passwörtern, die einen höheren Stromverbrauch hat, nur während des Erzeugens eines Einmal-Passworts in Betrieb sein. Zum Anzeigen des erzeugten Einmal-Passworts braucht nur die stromsparende Steuerlogik in Betrieb zu sein.

Typischerweise ist zudem die Dauer zum Erzeugen eines Einmal-Passworts, die im Bereich von Mikrosekunden liegt, erheblich geringer als die Dauer, die zum Ablesen des Displays erforderlich ist, und die im Bereich einiger Sekunden liegt. Aus diesem Grund ist die Menge an Energie, die sich einsparen lässt, indem die Einrichtung zum Erzeugen eines Einmal-Passworts, z.B. ein Mikroprozessor, nur beim Erzeugen des Einmal-Passworts betrieben wird, und indem zum Anzeigen des erzeugten Einmal-Passworts eine stromsparende, energiesparende Display-Steuerlogik (z.B. Display-Treiber) verwendet wird, ganz erheblich.

Gemäß einer bevorzugten Ausführungsform weist der Datenträger mit der zusätzlichen Display-Steuerlogik weiter einen zwischen die Einrichtung zum Erzeugen von Einmal-Passwörtern und die Display-Steuerlogik koppelbaren Display-Speicher auf, in dem zur Anzeige auf dem Display vorgesehene erzeugte Einmal-Passwörter speicherbar sind, so dass sie mittels der Display-Steuerlogik direkt aus dem Display-Speicher heraus auf dem Display anzeigbar sind. Sobald ein erzeugtes Einmal-Passwort aus der Einrichtung zum Erzeugen von Einmal-Passwörtern in den Display-Speicher geladen ist, kann die Einrichtung zum Erzeugen von Einmal-Passwörtern (z.B. Mikroprozessor) außer Betrieb genommen werden.

Wahlweise ist der Display-Speicher, ebenso wie die Display-Steuerlogik, stromsparend und/oder energiesparend betreibbar.

Wahlweise ist der Display-Speicher ein flüchtiger Speicher, der ein Haltezeit hat, die ausreichend lange ist, damit ein auf dem Display angezeigtes Einmal-Passwort vom Display abgelesen werden kann. Ein solcher flüchtiger Display-Speicher hat den Vorteil, dass die Anzeige einer auf dem Display angezeigten TAN von selbst wieder erlischt, günstigerweise, nachdem ein Benutzer die TAN vollständig abgelesen hat. Hierdurch wird verhindert, dass ein Unbefugter die TAN später erneut ablesen kann. Beispielsweise beträgt die Haltezeit mindestens eine Sekunde, weiter vorzugsweise mindestens drei Sekunden, weiter vorzugsweise mindestens fünf Sekunden. Wahlweise beträgt die Haltezeit höchstens fünf Sekunden, alternativ höchstens zehn Sekunden, alternativ höchstens dreißig Sekunden, alternativ höchstens eine Minute.

Wahlweise sind das Display und der Display-Speicher getrennte Elemente.

Wahlweise ist alternativ das Display selbst zugleich der Display-Speicher, insbesondere, falls der Display-Speicher ein flüchtiger Speicher mit einer vorbestimmten Haltezeit ist, z.B. einer Haltezeit wie der im vorangehenden Absatz beschriebenen Haltezeit. Beispielsweise ist das kombinierte Display-Speicher/Display ein bistabiles Display, welches nach seinem Abtrennen von der Versorgungsenergie noch einige Zeit lang, während der Haltezeit, den vor dem Abtrennen der Versorgungsspannung zuletzt angezeigten Wert anzeigt. Die Haltezeit des bistabilen Displays ist durch Parameter wie beispielsweise die chemische und/oder geometrische Beschaffenheit des bistabilen Displays eingestellt. Der Wert der Haltezeit für ein solches bistabiles Display kann je nach Wahl der Parameter von ungefähr einer Sekunde bis zu mehrere Monate sein. Im Zusammenhang mit der Erfindung sind die Parameter, insbesondere die chemische und/oder geometrische Beschaffenheit des bistabilen Displays, vorzugsweise so gewählt, dass eine Haltezeit wie die weiter oben beschriebene erzielt ist (z.B. typischerweise fünf Sekunden).

Wahlweise ist der Display-Speicher ein flüchtiger Speicher (z.B. ein RAM), der in einem Retention-Mode (insbesondere RAM-Retention-Mode) betreibbar ist, in dem der Display-Speicher seinen Speicherinhalt unter einer geringen Stromzufuhr halten kann. Für einen Display-Speicher in Gestalt eines typischen RAM beträgt der Strom, der zum Halten des Speicherinhalts des Display-Speichers im RAM-Retention-Mode erforderlich ist, ungefähr 0,1 µA. Ein solcher Strom kann auch von einer Batterie bereitgestellt werden, die zum Einbau in einen Datenträger (z.B. Smart Card, Chipkarte) geeignet ist. Wahlweise ist der Display-Speicher ein nichtflüchtiger Speicher, der seinen Speicherinhalt behält ohne dass von außen Energie zugeführt wird, z.B. ein EEPROM. Die Verwendung eines nichtflüchtigen Display-Speichers oder eines flüchtigen Speichers mit Retention-Mode hat den Vorteil, dass ein Benutzer das erzeugte Einmal-Passwort ohne Hast ablesen kann, so dass Ablesefehler beim Ablesen des Einmal-Passworts vermieden werden. Sofern das abgelesene Einmal-Passwort anschließend tatsächlich verwendet wird, besteht auch keine Gefahr eines Missbrauchs, da das Einmal-Passwort nur ein einziges Mal verwendbar ist und im Fall, dass es erneut verwendet wird, als ungültig zurückgewiesen wird.

Räumlich gesehen können die Display-Steuerlogik, die Einrichtung zum Erzeugen von Einmal-Passwörtern (z.B. Mikroprozessor) und ggf. der Display-Speicher auf unterschiedlichen Chips, insbesondere Halbleiterchips, implementiert sein. Alternativ sind je nach Bedarf einige oder alle der angeführten Elemente Display-Steuerlogik, Einrichtung zum Erzeugen von Einmal-Passwörtern (z.B. Mikroprozessor) und ggf. Display-Speicher in einem einzigen gemeinsamen Chip implementiert.

Erfindungsgemäß hat der Datenträger weiter eine Schalteinrichtung zum vorübergehenden und/oder dauerhaften elektrischen Koppeln der Einrichtung zum Erzeugen eines Einmal-Passworts und/oder ggf. der Display-Steuerlogik und/oder ggf. des Display-Speichers mit einer Energiequelle.

Gemäß einer bevorzugten Ausführungsform weist der Datenträger weiter eine Energiequelle auf, insbesondere mindestens eine Batterie und/oder Solarzelle und/oder Piezoelement, so dass der Datenträger autonom betreibbar ist, ohne die Beteiligung eines Terminals oder Lesegeräts bzw. Lese/Schreibgeräts. Insbesondere ist es für den Datenträger gemäß dieser Ausführungsform der Erfindung vorteilhaft, wenn zum Erzeugen, Anzeigen und Ablesen eines Einmal-Passworts keinerlei Hilfsmittel erforderlich sind, auch nicht für die Energieversorgung des Datenträgers. Daher wird bei dieser Ausführungsform die Energiequelle innerhalb des Datenträgers auch für die Energieversorgung der Einrichtung zum Erzeugen von Einmal-Passwörtern (z.B. Mikroprozessor, TAN-Generator) verwendet. Anders als bei der bekannten elektronischen Geldbörse mit Display, bei der während der Benutzung des Börsenchips der Börsenchip in jedem Fall über eine kontaktbehaftete Schnittstelle mit einem Terminal gekoppelt ist, so dass der Börsenchip ohne Zusatzaufwand auch durch das Terminal mit Energie versorgt werden kann, ist der erfindungsgemäße Datenträger mit einer Einrichtung zum Erzeugen von Einmal-Passwörtern bei dieser Ausführungsform in der Regel beim Erzeugen eines Einmal-Passworts nicht mit einem externen Terminal verbunden. Daher ist es bei dieser Ausführungsform der Erfindung vorteilhaft, wenn während des gesamten Erzeugens, Anzeigens und Ablesens eines Einmal-Passworts keine externe Energiequelle erforderlich ist, sondern wenn die interne Energiequelle des Datenträgers verwendet wird.

Bei einer weiteren Ausführungsform der Erfindung wird während des Erzeugens des Einmal-Passworts der Datenträger teilweise oder ganz, vorzugsweise ganz, mit Energie aus einer Energiequelle außerhalb des Datenträgers versorgt, beispielsweise mit Energie aus einer Energiequelle in einem Terminal für den Datenträger. Die Energieübertragung vom Terminal an den Datenträger kann dabei wahlweise kontaktlos oder kontaktbehaftet erfolgen.

Bei einer weiteren Ausführungsform der Erfindung, die auch mit der zuletzt genannten kombiniert sein kann, wird während des Anzeigens des Einmal-Passworts auf dem Display der Datenträger teilweise oder ganz, vorzugsweise ganz, mit Energie aus einer Energiequelle innerhalb des Datenträgers versorgt.

Gemäß weiteren bevorzugten Ausführungsformen wird während des Erzeugens des Einmal-Passworts die Einrichtung zum Erzeugen von Einmal-Passwörtern mit Energie aus einer Energiequelle außerhalb des Datenträgers versorgt. Dies hat den Vorteil, dass außerhalb des Datenträgers in der Regel problemlos eine leistungsfähige Energiequelle untergebracht werden kann, was innerhalb des Datenträgers nicht notwendig der Fall ist. Zudem wird ggf. durch die strom- und spannungsintensive Einrichtung zum Erzeugen von Einmal-Passwörtern eine ggf. im Datenträger vorhandene interne Energiequelle nicht belastet, oder der Datenträger kommt mit einer weniger leistungsfähigen Energiequelle aus. Weiter vorzugsweise wird während des Anzeigens des Einmal-Passworts auf dem Display eine von der Einrichtung zum Erzeugen von Einmal-Passwörtern gesonderte Display-Steuerlogik zum Ansteuern des Displays mit Energie aus einer Energiequelle innerhalb des Datenträgers versorgt. Das Anzeigen des Einmal-Passworts kann auf diese Weise unabhängig von einer Zugangsmöglichkeit zu einer externen Energiequelle, beispielsweise einer Energiequelle in einem Terminal, und daher besonders komfortabel erfolgen.

Gemäß einer weiteren Ausführungsform der Erfindung wird eine Mehrzahl von mindestens zwei Einmal-Passwörtern erzeugt und im Datenträger abgespeichert, ohne dass dazwischen ein Einmal-Passwort auf dem Display angezeigt wird.

Wahlweise werden eine Mehrzahl von Einmal-Passwörtern unter Verwendung einer externen Energiequelle erzeugt, während der Datenträger mit der externen Energiequelle gekoppelt ist.

Die externe Energiequelle kann z.B. die Energiequelle eines Terminals für Datenträger sein, beispielsweise eines Zahlungsverkehrterminals. Später, beispielsweise beim Homebanking am eigenen PC, können die vorab erzeugten Einmal-Passwörter am Display angezeigt werden, wozu beispielsweise eine interne Energiequelle verwendet wird, die im Datenträger vorgesehen ist. Bei dieser Variante reicht innerhalb des Datenträgers eine Energiequelle, die eine relativ niedrige Spannung liefert, die zum Anzeigen des Einmal-Passworts auf dem Display ausreicht, die aber zum Erzeugen von Einmal-Passwörtern unter Umständen nicht ausreichen würde.

Verbreitet sind Batterien, die eine Spannung von ca. 2,7 Volt liefern. Wird die interne Energiequelle des Datenträgers nur zum Anzeigen eines Einmal-Passworts auf dem Display benötigt, wird beispielsweise eine einzelne solche 2,7-Volt-Batterie im Datenträger vorgesehen. Wird die interne Energiequelle des Datenträgers hingegen auch zum Erzeugen eines Einmal-Passworts mit einer üblichen Einrichtung zum Erzeugen von Einmal-Passwörtern, z.B. eines TAN-Generators in Gestalt eines Mikrocontrollers bzw. Mikroprozessors, benötigt, die üblicherweise eine Versorgungsspannung von 5 Volt benötigt, werden zwei solche 2,7-Volt-Batterien im Datenträger vorgesehen, die zusammengeschaltet die erforderlichen 5 Volt zu liefern vermögen. Statt zwei 2,7-Volt-Batterien vorzusehen, kann alternativ auch eine einzelne Batterie mit z.B. 2,7 Volt Spannung oder einem anderen Spannungswert unter der Betriebsspannung des Mikroprozessors von z.B. 5 Volt vorgesehen werden, die mit einer nachgeschalteten Ladungspumpe (Chargepump) kombiniert ist, so dass die erforderlichen z.B. 5 Volt erzeugt werden. Für Mikrocontroller bzw. Mikroprozessoren, die mit niedrigeren Betriebsspannungen auskommen, reichen entsprechend Batterien oder Batterieanordnungen mit niedrigeren Spannungen, z.B. eine einzelne 2,7-Volt-Batterie ohne Spannungsanpassung.

Die Anzahl der Einmal-Passwörter, die vorab erzeugt und abgespeichert werden, ohne dass zwischen dem Erzeugen und Abspeichern der Einmal-Passwörter ein Einmal-Passwort auf dem Display angezeigt wird, hat wahlweise einen vorbestimmten Wert, der beispielsweise bei typischerweise 250 liegen kann, alternativ bei typischerweise 1000 oder mehreren Tausend. Alternativ kann eine Anzahl von lediglich typischerweise 10 Einmal-Passwörtern erzeugt und abgespeichert werden, was den Vorteil hat, dass im Fall eines Verlusts des Datenträgers nur eine geringe Anzahl von vorab erzeugten Einmal-Passwörtern in die Hände eines möglicherweise erfolgreichen Hackers gelangt. Wahlweise wird die Anzahl von Passwörtern bei jedem Kontaktieren des Datenträgers mit einer externen Energiequelle, z.B. bei jedem Kontaktieren mit einem Terminal, auf den vorbestimmten Wert aufgefüllt, sofern seit dem letzten Kontaktieren Einmal-Passwörter verbraucht worden sind.

Die Schalteinrichtung ist derart eingerichtet, dass sie bewirkt, dass die Einrichtung zum Erzeugen von Einmal-Passwörtern während des Erzeugens eines Einmal-Passworts mit Energie aus der Energiequelle versorgt wird. Weiter ist die Schalteinrichtung derart eingerichtet, dass die Versorgung der Einrichtung zum Erzeugen von Einmal-Passwörtern mit Energie der Energiequelle unterbrochen wird, sobald das Einmal-Passwort erzeugt und zur Anzeige auf dem Display gesichert ist, da bei dieser Funktionsweise der Schalteinrichtung ein besonders stromsparender Betrieb des Datenträgers ermöglicht ist. Gesichert zur Anzeige auf dem Display ist das Einmal-Passwort beispielsweise sobald es in dem Display-Speicher abgespeichert ist.

Weiter ist die Schalteinrichtung derart eingerichtet, dass während des Anzeigens des Einmal-Passworts auf dem Display die Display-Steuerlogik und ggf. je nach Bedarf der Display-Speicher mit Energie der Energiequelle versorgt wird.

Die Schalteinrichtung steuert also insgesamt die Energieversorgung des Datenträgers während des gesamten Ablaufs des Erzeugens eines Einmal-Passworts mit der Einrichtung zum Erzeugen von Einmal-Passwörtern und des nachfolgenden Anzeigens des erzeugten Einmal-Passworts auf dem Display. Dabei werden nur diejenigen Elemente des Datenträgers mit Energie versorgt, die zum jeweiligen Zeitpunkt Energie benötigen. Dies ist besonders bei einem Datenträger mit einer eigenen internen Energiequelle vorteilhaft, die zur Energieversorgung der Display-Steuerlogik und der Einrichtung zum Erzeugen von Einmal-Passwörtern und ggf. des Display-Speichers verwendet wird.

Weiter ist die Schalteinrichtung vorzugsweise mittels einer manuell betätigbaren Energie-Bedieneinrichtung, insbesondere einer Tastatur mit mindestens einer Taste oder eines Druckknopfes oder Tastschalters, betätigbar. Beispielsweise wird durch ein einziges Drücken der Energie-Bedieneinrichtung, beispielsweise eines Tastschalters, ein Einmal-Passwort erzeugt und auf dem Display angezeigt. Dabei wird die Energiezufuhr innerhalb des Datenträgers wie weiter oben beschrieben effizient geregelt. Die Energie-Bedieneinrichtung kann insbesondere mit jeder beliebigen Art von Schalter ausgeführt sein, z.B. mechanischer Schalter, Piezoschalter, Relais etc..

Gemäß einer Variante wird "auf Knopfdruck", d.h. durch Bedienen der Energie-Bedieneinrichtung in jedem Fall sofort ein Einmal-Passwort erzeugt. Der Datenträger gemäß dieser Variante ist besonders komfortabel zu handhaben.

Gemäß einer alternativen Variante weist der Datenträger weiter eine Zugangs-Kontrolleinrichtung auf, die den Betrieb des Datenträgers zum Erzeugen eines Einmal-Passworts nur auf eine erfolgreiche Eingabe einer vorbestimmten Zugangs-Kennung (z.B. personal identification number, PIN) hin ermöglicht. Der Datenträger gemäß dieser Variante bietet ein höheres Maß an Sicherheit als der Datenträger ohne die Zugangskontrolle mittels der Zugangs-Kennung (PIN).

Statt einer PIN kann als Zugangs-Kennung, damit der Betrieb des Datenträgers ermöglicht wird, alternativ ein biometrisches Merkmal einzugeben sein, beispielsweise ein oder mehrere Fingerabdrücke, ein Augenirismerkmal, ein Gesichtsmerkmal wie z.B. die Gesichtsform etc.. Entsprechend hat der Datenträger wahlweise eine biometrischer Erfassungseinrichtung wie z.B. einen Fingerabdrucksensor zum Erfassen von Fingerabrücken oder/und eine Kamera zum Erfassen der Augeniris bzw. der Gesichtsform oder anderer Gesichtsmerkmale einer Person, die auf den Datenträger zugreifen möchte.

Weiter vorzugsweise weist der Datenträger mit Zugangskontrolle über die Zugangs-Kennung eine Zugangs-Bedieneinrichtung zum Bedienen der Zugangs-Kontrolleinrichtung auf, insbesondere eine Tastatur mit mindestens einer Taste oder einen Druckknopf oder Tastschalter.

Die Zugangs-Bedieneinrichtung kann beispielsweise eine Zehnertastatur sein, ein Tastenfeld mit zwei Tasten oder eine einzige Taste.

Wahlweise sind die Energie-Bedieneinrichtung, mit der die Energieversorgung und die Erzeugung von Einmal-Passwörtern ausgelöst wird, und die Zugangs-Bedieneinrichtung, mit der die Zugangs-Kennung eingegeben werden kann, durch ein gemeinsames Universal-Bedienelement gebildet, das je nach Art der Bedienung die Eingabe der Zugangs-Kennung ermöglicht oder die Erzeugung eines Einmal-Passworts auslöst. Das gemeinsame Universal-Bedienelement kann beispielsweise durch einen einzigen Tastschalter gebildet sein.

Im Folgenden wird die Erfindung anhand von Ausführungsbeispielen und unter Bezugnahme auf die Zeichnung näher erläutert, in der zeigen:
- Fig. 1: eine schematische Darstellung einer elektronischen Geldbörse (Geldkarte) mit Display;
- Fig. 2: eine schematische Darstellung eines erfindungsgemäßen als ec-Karte mit Geldkartenfunktion gestalteten Datenträgers mit einer Einrichtung zum Erzeugen von Einmal-Passwörtern und mit einem Display zum Anzeigen eines erzeugten Einmal-Passworts.

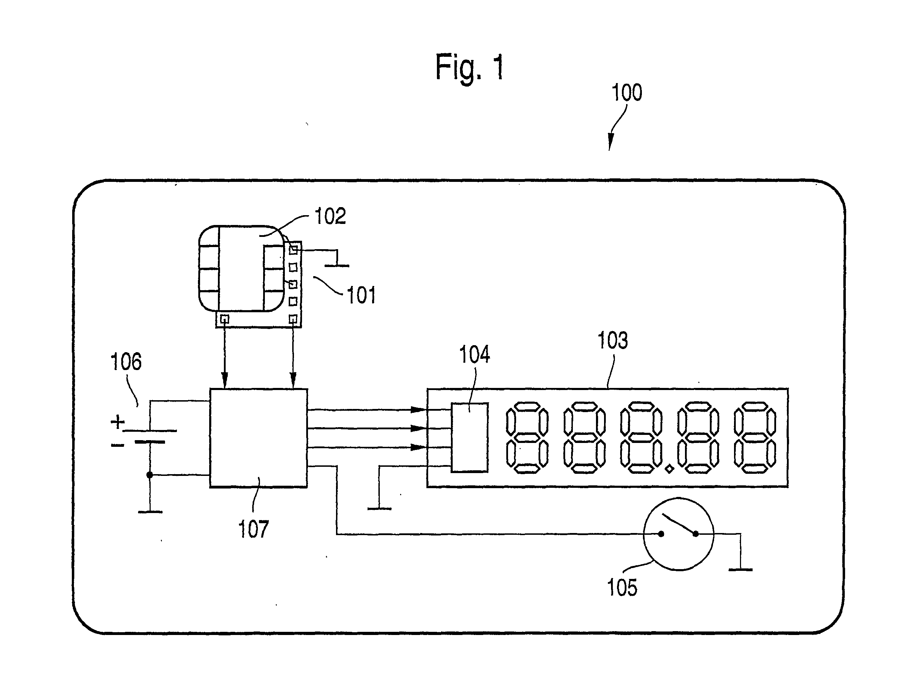

Fig. 1 zeigt eine schematische Darstellung einer elektronischen Geldbörse (Geldkarte) 100 mit Display 103. Die Geldkarte 100 hat einen Smart Card Controller, nämlich den Geldbörsenchip 101, auf dem ein elektronisches Guthaben gespeichert ist, Kontakte 102 für die kontaktbehaftete Kontaktierung des Geldbörsenchips 101, und über die der Geldbörsenchip 101 mit Energie versorgt wird, ein Display 103, eine Display-Steuerlogik 104 (System-Controller) zum Ansteuern des Display 103, ein Energie-Bedienelement in Form eines Tastschalters 105, eine Energiequelle in Form einer Batterie 106 und eine Schalteinrichtung in Form eines System-Controller-Moduls 107 zum Schalten von Energieströmen und Datenströmen zwischen den einzelnen Elementen innerhalb der elektronischen Geldbörse 100. Die Display-Steuerlogik 104 ist vorzugsweise in das Display 103 integriert, kann aber auch gesondert vorgesehen sein.

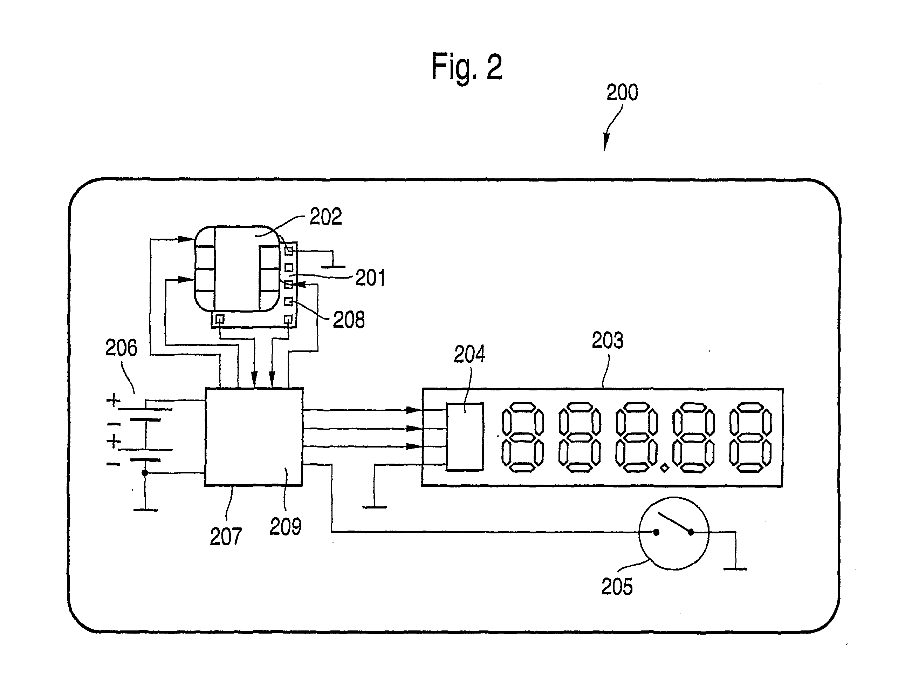

Fig. 2 zeigt eine schematische Darstellung eines als ec-Karte 200 mit Geldkartenfunktion gestalteten erfindungsgemäßen Datenträgers mit einer Einrichtung zum Erzeugen von Einmal-Passwörtern und mit einem Display 203 zum Anzeigen eines erzeugten Einmal-Passworts.

Die ec-Karte 200 aus Fig. 2 hat einen Smart Card Controller 208. In dem Smart Card Controller 208 ist die Funktion eines Geldbörsenchips einer elektronischen Geldbörse (Geldkartenfunktion) implementiert. Entsprechend hat die ec-Karte Kontakte 202 für die kontaktbehaftete Kontaktierung zwischen der ec-Karte 200 und einem externen Lesegerät oder Terminal, um die für eine elektronische Geldbörse üblichen Kommunikationsvorgänge zwischen der ec-Karte 200 und dem Lesegerät bzw. Terminal durchführen zu können. Die ec-Karte ist einem Kundenkonto zugeordnet, nämlich einem Bankkonto (z.B. Girokonto) bei einem Kreditinstitut.

Zusätzlich zu den für elektronische Geldbörsen (Geldkarten) üblichen Funktionalitäten ist in dem Smart Card Controller 208 ein TAN-Generator 201 implementiert, mit dem sich Einmal-Passwörter in Form von Transaktionsnummern (TANs) für gesicherte elektronische Zahlungsverkehr-Transaktionen erzeugen lassen.

Unter elektronischen (Zahlungsverkehr-)Transaktionen werden beispielsweise Überweisungen, Orders für Wertpapiere, Einrichtung, Löschung und Änderung von Daueraufträgen und Sparplänen, Aufträge betreffend die Führung des Kundenkontos wie z.B. Freistellungsaufträge oder Adressänderungen, und dergleichen verstanden.

Weiter weist die ec-Karte 200 aus Fig. 2 auf: einen flüchtigen Display-Speicher 209 zum Speichern einer erzeugten Transaktionsnummer (TAN), ein Display 203 zum Anzeigen von durch den TAN-Generator 201 erzeugten und im Display-Speicher 209 abgespeicherten Transaktionsnummern (TANs), eine Display-Steuerlogik 204 (Display-Treiber) zum Ansteuern des Displays 203, ein Energie-Bedienelement in Form eines Tastschalters 205, eine Energiequelle in Form von zwei in Reihe geschalteten Batterien 206 und eine Schalteinrichtung in Form eines System-Controller-Moduls 207 zum Schalten von Energieströmen und Datenströmen zwischen den einzelnen Elementen innerhalb der ec-Karte 200. Die Batterien 206 liefern gemeinsam die zum Betreiben der Smart Card erforderliche Spannung. Diese Spannung beträgt derzeit in der Regel 5V +/- 10 %, so dass beispielsweise zwei Batterien zu je 2,7 V verwendet werden. Wahlweise sind mehr oder weniger als zwei Batterien vorgesehen, durch die sich insgesamt die erforderliche Spannung bereitstellen lässt.

Der Display-Speicher 209 ist funktionell gesehen mit der Schalteinrichtung in Gestalt eines System-Controller-Moduls 207 und mit der Display-Steuerlogik 204 (System-Controller) koppelbar und ist vorzugsweise in die Schalteinrichtung 207 integriert oder alternativ in die Display-Steuerlogik 204 integriert.

Die Display-Steuerlogik (Display-Treiber) 204 ist wahlweise in das Display 203 integriert oder von dem Display 203 gesondert vorgesehen.

Der Smart Card Controller 208 mit dem TAN-Generator 201, die Schalteinrichtung in Form eines System-Controller-Moduls 207, der Display-Speicher 209 und die Display-Steuerlogik 204 sind wahlweise auf gesonderten Chips implementiert oder alle oder ein Teil von ihnen auf ein und demselben Chip implementiert.

Mit der ec-Karte 200 lässt sich beispielsweise folgendermaßen eine TAN erzeugen und auf dem Display 203 anzeigen.

Ein Benutzer betätigt den Tastschalter (Funktionstaster) 205, d.h. drückt ihn und lässt ihn wieder los, und löst hierdurch die Erzeugung einer TAN aus.

Auf das Betätigen des Tastschalters (Funktionstasters) 205 hin liefert die Schalteinrichtung (System-Controller-Modul 207) an den Smart Card Controller 208 ein Taktsignal CLK und eine Betriebsspannung Vcc. Zum nun vorgesehenen Betrieb des TAN-Generators 201 wird die Betriebsspannung Vcc durch die Batterien 206 geliefert. Sobald das Taktsignal CLK und die Betriebsspannung Vcc beim Smart Card Controller 208 bereitstehen, sendet die Schalteinrichtung (System-Controller-Modul 207) über eine erste Datenleitung I/O1 einen TAN-Erzeugungs-Befehl an den Smart Card Controller 208, genauer an den TAN-Generator 201, mit dem der TAN-Generator 201 aufgefordert wird, eine (neue) TAN zu erzeugen. (Alternativ wird der TAN-Erzeugungsbefehl über die zweite Datenleitung I/O2 oder über die dritte Datenleitung I/O3 gesendet). Die TAN wird z.B. als Kryptogramm nach einem an sich bekannten Verfahren erzeugt, mit einer parametrisierten Verschlüsselungsfunktion, einem Schlüssel und einem zu verschlüsselnden Klartext. Die erzeugte TAN wird vom TAN-Generator 201 über eine zweite und dritte Datenleitung I/O2, I/O3 (bzw. Datenleitung, über die nicht der TAN-Erzeugungs-Befehl gesandt wurde) zur Schalteinrichtung (zum System-Controller-Modul 207) gesandt und im Display-Speicher 209 abgespeichert. Nun werden das Taktsignal CLK und die Betriebsspannung Vcc (oder nur die Betriebsspannung Vcc) zum Smart Card Controller 208 unterbrochen. Statt dessen werden ein für die Display-Steuerlogik 204 (Display-Treiber) geeignetes Taktsignal CLK' und die Betriebsspannung Vcc an die Display-Steuerlogik 204 (Display-Treiber) angelegt. Das Taktsignal CLK' für die Display-Steuerlogik 204 (Display-Treiber) hat in der Regel, um Energie zu sparen, eine niedrigere Frequenz als das Taktsignal CLK für den Smart Card Controller 208. Bei alternativen Displays, die kein Taktsignal benötigen, wird nur die Versorgungsspannung an das Display angelegt. Die Batterien 206 müssen nun nur noch die sparsame Schalteinrichtung (System-Controller-Modul 207) und die sparsame Display-Steuerlogik 204 mit Energie versorgen. Sobald das Taktsignal CLK' (ggf. optional bei Displays, die keinen Takt benötigen) und die Betriebsspannung Vcc bei der Display-Steuerlogik 204 bereitstehen, sendet die Schalteinrichtung (System-Controller-Modul 207) über eine vierte Datenleitung I/O DATA die in dem Display-Speicher 209 abgespeicherte Transaktionsnummer TAN an das Display 203. Die TAN wird auf dem Display 203 angezeigt und verbleibt dort für drei Sekunden angezeigt. Nach Ablauf der drei Sekunden werden die Verbindungen des Taktsignals CLK und der Betriebsspannung Vcc (oder nur der Betriebsspannung Vcc) zur Display-Steuerlogik 204 unterbrochen. Die Anzeige auf dem Display 203 erlischt daraufhin.

Gemäß Fig. 2 verlaufen vier Datenleitungen I/O zwischen dem System-Controller-Modul 207 und der Display-Steuerlogik (Display-Treiber). Alternativ können auch eine höhere oder niedrigere Anzahl von Datenleitungen I/O vorgesehen sein.

Die Anzeigezeit muss nicht drei Sekunden betragen, sondern kann auch einen anderen sinnvollen Wert haben, beispielsweise vier oder fünf Sekunden.

Folgende beispielhafte Bedienmöglichkeiten für erfindungsgemäße Datenträger mit nur einem einzigen Tastschalter (Funktionstaster) 205 werden vorgesehen.

Beispielsweise wird die TAN-Erzeugung durch ein langes Betätigen (z.B. Drücken) (z.B. länger als zwei Sekunden) des Tastschalters 205 ausgelöst. Durch ein kurzes Betätigen (z.B. Drücken) des Tastschalters 205 wird bewirkt, dass das Guthaben im Geldbörsenchip der ec-Karte vorübergehend auf dem Display 203 angezeigt wird, beispielsweise für zwei Sekunden. Alternativ löst kurzes Betätigen die TAN-Erzeugung und -Anzeige und langes Betätigen die Anzeige des Guthabens des Geldbörsenchips aus. Alternativ wird eine andere ähnliche Bedienweise verwendet, wie sie z.B. für digitale Kleingeräte mit Display wie z.B. Digitaluhren, Digitalthermometer und digitale Fahrradcomputer bekannt ist.

Alternativ wird die Anzeige des Geldbörsen-Guthabens durch ein einmaliges Drücken des Tastschalters 205 ausgelöst und die Erzeugung und Anzeige einer TAN durch ein zweimaliges Drücken (z.B. einen Doppelklick wie er ähnlich bei Computermäusen bekannt ist) des Tastschalters 205 ausgelöst (oder umgekehrt).

Erfindungsgemäße Datenträger mit zwei Tasten als Energie-Bedienelement lassen sich beispielsweise derart bedienen, dass mit einer ersten Taste die Erzeugung und Anzeige einer TAN ausgelöst wird und mit einer zweiten Taste die Anzeige des Börsenguthabens im Börsenchip der elektronischen Geldbörse (Geldkarte) angezeigt wird.

Bei Ausführungsformen der Erfindung, bei denen vor der Erzeugung eines Einmal-Passworts die Eingabe einer Zugangs-Kennung (z.B. PIN) erforderlich ist, hat der Datenträger zur Eingabe der Zugangs-Kennung als Zugangs-Bedieneinrichtung beispielsweise eine Zehnertastatur mit Tasten zur Eingabe der Ziffern 0 bis 9. Wahlweise sind ein oder mehrere weitere Tasten vorgesehen, mit denen sich die Erzeugung und Anzeige eines Einmal-Passworts auslösen lässt. Alternativ werden eine oder mehrere der Tasten zur Eingabe der Zugangs-Kennung (z.B. PIN) auch zum Auslösen der Erzeugung und Anzeige des Einmal-Passworts (z.B. TAN) verwendet, d.h. die Zehnertastatur dient als Universal-Bedieneinrichtung. Zur Eingabe der Zugangs-Kennung können wahlweise weniger als zehn Tasten vorgesehen sein, mit denen die Ziffern 0 bis 9 durch geeignet ausgewählte Tastenkombinationen eingebbar sind, ähnlich wie sie z.B. zum Einstellen von digitalen Kleingeräten mit Display wie z.B. Digitaluhren, Digitalthermometern und digitalen Fahrradcomputern bekannt sind. Beispielsweise wird mit einer ersten Taste eine einzustellende Stelle einer mehrstelligen Zugangs-Kennung ausgewählt und mit einer zweiten Taste der Wert der ausgewählten Stelle durch eine entsprechende Anzahl von Malen der Betätigung der zweiten Taste auf einen Wert von 0 bis 9 eingestellt (z.B. "hochgezählt" oder "heruntergezählt").

Das Display ist beispielsweise ein Flüssigkristalldisplay, elektronisches Papier oder sonstiges für einen Datenträger geeignetes Display.

Weiter hat das Display beispielsweise eine vorbestimmte Anzahl von Stellen, die z.B. durch Mehr-Segment-Anzeigen oder durch Punktmatrixanzeigen gebildet sind.

Wahlweise hat das Display die gleiche Anzahl von Stellen wie ein erzeugtes anzuzeigendes Einmal-Passwort oder eine größere Anzahl von Stellen als ein anzuzeigendes Einmal-Passwort, so dass ein erzeugtes Einmal-Passwort auf ein Mal auf dem Display anzeigbar ist. Alternativ hat das Display weniger Stellen als ein anzuzeigendes Einmal-Passwort. Dabei wird das Einmal-Passwort beispielsweise als stetig durchlaufende Laufzeile angezeigt. Alternativ wird das Einmal-Passwort in zwei oder mehr Teile zerlegt, die nacheinander auf dem Display angezeigt werden, wahlweise mit oder ohne Überlapp zwischen den Teilen des Einmal-Passworts.

Beispielsweise hat das Display, entsprechend der Länge der derzeit verwendeten Transaktionsnummern (TANs) für gesicherte Zahlungsverkehr-Transaktionen bei Kreditinstituten, sechs Stellen (bzw. mehr Stellen für künftige längere TANs), wobei alle Stellen eines erzeugten Einmal-Passworts (insbesondere TAN) auf ein Mal auf dem Display angezeigt werden. Alternativ hat das Display fünf Stellen. Um ein sechsstelliges Einmal-Passwort auf dem fünfstelligen Display anzuzeigen werden zuerst die ersten fünf Stellen und anschließend die letzten fünf Stellen auf dem Display angezeigt (Anzeigeart mit Überlapp, d.h. die mittleren Stellen werden beide Male angezeigt). Alternativ werden auf dem fünfstelligen Display zuerst die ersten drei und anschließend die letzten drei Stellen des sechsstelligen Einmal-Passworts angezeigt (Anzeigeart ohne Überlapp, d.h. jede Stelle des Einmal-Passworts wird nur ein Mal angezeigt).

## Patentansprüche

1. Datenträger (200), insbesondere Chipkarte, insbesondere Smart Card, mit einer Einrichtung (201) zum Erzeugen von Einmal-Passwörtern und mit einem Display (203) zum Anzeigen von erzeugten Einmal-Passwörtern, **dadurch gekennzeichnet, dass** der Datenträger weiter aufweist:
eine zum Ansteuern des Displays (203) eingerichtete Display-Steuerlogik (204), die von der Einrichtung (201) zum Erzeugen von Einmal-Passwörtern unabhängig betreibbar ist, wobei die Display-Steuerlogik (204) einen erheblich geringeren Leistungsverbrauch hat als die Einrichtung (201) zum Erzeugen von Einmal-Passwörtern, und
eine Schalteinrichtung (207), mit der die Einrichtung (201) zum Erzeugen eines Einmal-Passworts und die Display-Steuerlogik (204) vorübergehend oder dauerhaft mit einer Energiequelle (206) elektrisch koppelbar sind, wobei die Schalteinrichtung (207) derart eingerichtet ist, dass sie bewirkt,
- dass die Einrichtung (201) zum Erzeugen von Einmal-Passwörtern während des Erzeugens eines Einmal-Passworts mit Energie aus der Energiequelle (206) versorgt wird,
- dass die Versorgung der Einrichtung (201) zum Erzeugen von Einmal-Passwörtern mit Energie der Energiequelle (206) unterbrochen wird, sobald das Einmal-Passwort erzeugt und zur Anzeige auf dem Display (203) gesichert ist, und
- dass während des Anzeigens des Einmal-Passworts auf dem Display (203) die Display-Steuerlogik (204) mit Energie der Energiequelle (206) versorgt wird.

2. Datenträger nach Anspruch 1, wobei das erzeugte Einmal-Passwort eine Transaktionsnummer (TAN) zum Abwickeln einer gesicherten elektronischen Zahlungsverkehr-Transaktion über ein einem Inhaber des Datenträgers zugeordnetes Kundenkonto ist.

3. Datenträger nach Anspruch 1 oder 2, wobei der Datenträger die Funktion einer Zahlungsverkehrkarte (ec-Karte, Kreditkarte, Debitkarte) hat, in der Informationen in Bezug auf ein einem Inhaber des Datenträgers zugeordnetes Kundenkonto und/oder Funktionalitäten zum Abwickeln von gesicherten elektronischen Zahlungsverkehr-Transaktionen über das Kundenkonto implementiert sind.

4. Datenträger nach einem der Ansprüche 1 bis 3, wobei der Datenträger die Funktion einer elektronischen Geldbörse (GELDKARTE) hat.

5. Datenträger nach Anspruch 4, wobei das Display (203) zum Anzeigen von Informationen der elektronischen Geldbörse eingerichtet ist, insbesondere des aktuellen Guthabens der elektronischen Geldbörse.

6. Datenträger nach einem der Ansprüche 1 bis 5, wobei die Einrichtung zum Erzeugen von Einmal-Passwörtern (TAN-Generator) ein Mikroprozessor (208) oder ein Teil eines Mikroprozessors (208) ist.

7. Datenträger nach einem der Ansprüche 1 bis 6, der weiter einen zwischen die Einrichtung (201) zum Erzeugen von Einmal-Passwörtern und die Display-Steuerlogik (204) koppelbaren Display-Speicher (209) aufweist, in dem zur Anzeige auf dem Display (203) vorgesehene erzeugte Einmal-Passwörter speicherbar sind, so dass sie mittels der Display-Steuerlogik (204) direkt aus dem Display-Speicher (209) heraus auf dem Display (203) anzeigbar sind.

8. Datenträger nach Anspruch 7, wobei das Einmal-Passwort zur Anzeige auf dem Display (203) gesichert ist sobald das Einmal-Passwort in dem Display-Speicher (209) abgespeichert ist.

9. Datenträger nach Anspruch 7 oder 8, wobei der Display-Speicher (209) ein flüchtiger Speicher ist, der ein Haltezeit hat, die ausreichend lange ist, damit ein auf dem Display (203) angezeigtes Einmal-Passwort vom Display (203) abgelesen werden kann.

10. Datenträger nach Anspruch 9, wobei die Haltezeit mindestens eine Sekunde, weiter vorzugsweise mindestens drei Sekunden, weiter vorzugsweise mindestens fünf Sekunden beträgt.

11. Datenträger nach Anspruch 7 oder 8, wobei der Display-Speicher (209) ein flüchtiger Speicher ist, der in einem Retention-Mode betreibbar ist, in dem ein Speicherinhalt des Display-Speichers (209) unter geringer Stromzufuhr haltbar ist.

12. Datenträger nach Anspruch 7 oder 8, wobei der Display-Speicher (209) ein nichtflüchtiger Speicher ist.

13. Datenträger nach einem der Ansprüche 1 bis 12, wobei die Schalteinrichtung (207) mittels einer manuell betätigbaren Energie-Bedieneinrichtung (205), insbesondere einer Tastatur mit mindestens einer Taste oder eines Tastschalters, betätigbar ist.

14. Datenträger nach einem der Ansprüche 1. bis 13, der weiter eine Energiequelle (206) aufweist, insbesondere mindestens eine Batterie und/oder Solarzelle und/oder Piezoelement.

15. Datenträger nach einem der Ansprüche 1 bis 14, der weiter eine Zugangs-Kontrolleinrichtung aufweist, die den Betrieb des Datenträgers zum Erzeugen eines Einmal-Passworts nur auf eine erfolgreiche Eingabe einer vorbestimmten Zugangs-Kennung hin ermöglicht.

16. Datenträger nach Anspruch 15, der weiter eine Zugangs-Bedieneinrichtung zum Bedienen der Zugangs-Kontrolleinrichtung aufweist, insbesondere eine Tastatur mit mindestens einer Taste oder einen Tastschalter.

17. Datenträger nach Ansprüchen 13 und 16 in Verbindung, wobei die Energie-Bedieneinrichtung (205) und die Zugangs-Bedieneinrichtung durch ein gemeinsames Universal-Bedienelement gebildet sind.

18. Datenträger nach einem der Ansprüche 1 bis 17, der weiter eine biometrische Erfassungseinrichtung zum Erfassen biometrischer Daten aufweist.

19. Datenträger nach Anspruch 18, der als biometrische Erfassungseinrichtung einen Fingerabrucksensor oder/ und eine Kamera aufweist.

20. Verfahren zum Betreiben eines Datenträgers (200), insbesondere Chipkarte, nach einem der Ansprüche 1 bis 19, mit einer Einrichtung (201) zum Erzeugen von Einmal-Passwörtern und mit einem Display (203) zum Anzeigen von erzeugten Einmal-Passwörtern, wobei bei dem Verfahren mit der Einrichtung (201) zum Erzeugen von Einmal-Passwörtern ein Einmal-Passwort erzeugt wird und das erzeugte Einmal-Passwort auf dem Display (203) angezeigt wird, **dadurch gekennzeichnet, dass** eine Schalteinrichtung des Datenträgers bewirkt, dass
- während des Erzeugens des Einmal-Passworts die Einrichtung (201) zum Erzeugen von Einmal-Passwörtern mit Energie aus einer Energiequelle (206) versorgt wird,
- während des Anzeigens des Einmal-Passworts auf dem Display (203) eine von der Einrichtung (201) zum Erzeugen von Einmal-Passwörtern gesonderte Display-Steuerlogik (204) zum Ansteuern des Displays (203) mit Energie aus einer Energiequelle (206) versorgt wird, und
- die Versorgung der Einrichtung (201) zum Erzeugen von Einmal-Passwörtern mit Energie der Energiequelle (206) unterbrochen wird, sobald das Einmal-Passwort erzeugt und zur Anzeige auf dem Display (203) gesichert ist.

21. Verfahren nach Anspruch 20, wobei das Erzeugen und Anzeigen des Einmal-Passworts durch ein Betätigen eines Energie-Bedienelements (205), insbesondere eines Tastschalters, bewirkt wird.

22. Verfahren nach Anspruch 20 oder 21, wobei
- während des Erzeugens des Einmal-Passworts der Datenträger (200) teilweise oder ganz mit Energie aus einer Energiequelle außerhalb des Datenträgers versorgt wird.

23. Verfahren nach einem der Ansprüche 20 bis 22, wobei
- während des Erzeugens des Einmal-Passworts der Datenträger (200) teilweise oder ganz mit Energie aus einer Energiequelle (206) innerhalb des Datenträgers versorgt wird.

24. Verfahren nach einem der Ansprüche 20 bis 23, wobei
- während des Anzeigens des Einmal-Passworts auf dem Display (203) der Datenträger (200) teilweise oder ganz mit Energie aus einer Energiequelle (206) innerhalb des Datenträgers (200) versorgt wird.

25. Verfahren nach einem der Ansprüche 20 bis 24, wobei
- während des Erzeugens des Einmal-Passworts die Einrichtung (201) zum Erzeugen von Einmal-Passwörtern mit Energie aus einer Energiequelle außerhalb des Datenträgers versorgt wird, und
- während des Anzeigens des Einmal-Passworts auf dem Display (203) eine von der Einrichtung (201) zum Erzeugen von Einmal-Passwörtern gesonderte Display-Steuerlogik (204) zum Ansteuern des Displays (203) mit Energie aus einer Energiequelle (206) innerhalb des Datenträgers versorgt wird.

26. Verfahren nach einem der Ansprüche 20 bis 25, wobei eine Mehrzahl von mindestens zwei Einmal-Passwörtern erzeugt und im Datenträger abgespeichert wird, ohne dass dazwischen ein Einmal-Passwort auf dem Display angezeigt wird.

27. Verfahren nach einem der Ansprüche 20 bis 26, wobei vor dem Erzeugen des Einmal-Passworts eine vorbestimmte Zugangs-Kennung in eine Zugangs-Kontrolleinrichtung eingegeben wird, die den Betrieb des Datenträgers (200) zum Erzeugen eines Einmal-Passworts nur auf eine erfolgreiche Eingabe der Zugangs-Kennung hin ermöglicht.

28. Verwendung des Verfahrens nach einem der Ansprüche 20 bis 27 bei der Bestätigung einer gesicherten elektronischen Zahlungsverkehr-Transaktion über ein bei einem Kreditinstitut unterhaltenes Kundenkonto, insbesondere Bankkonto, des Inhabers des Datenträgers (200), mittels einer Transaktionsnummer (TAN) wobei
- eine gesicherte Zahlungsverkehr-Transaktion veranlasst wird, bei der, damit sie ausgeführt wird, eine nachfolgende Bestätigung mittels einer Transaktionsnummer (TAN) erforderlich ist,
- ein Einmal-Passwort als Transaktionsnummer (TAN) für die Bestätigung der Zahlungsverkehr-Transaktion erzeugt und auf dem Display (203) des Datenträgers (200) angezeigt wird,
- die Transaktionsnummer (TAN) vom Display (203) des Datenträgers (200) abgelesen wird und
- die Zahlungsverkehr-Transaktion bestätigt wird, indem die Transaktionsnummer (TAN) dem Kreditinstitut zur Verfügung gestellt wird.

29. Verwendung eines nach dem Verfahren nach einem der Ansprüche 20 bis 27 erzeugten Einmal-Passworts zur Authentisierung eines Inhabers des Datenträgers (200).

## Claims

1. A data carrier (200), in particular chip card, in particular smart card, having a device (201) for generating one-time passwords and having a display (203) for displaying generated one-time passwords, **characterized in that** the data carrier has further:
a display control logic (204) adapted to drive the display (203), which is runnable independently of the device (201) for generating one-time passwords, wherein the display control logic (204) has a considerably lower power consumption than the device (201) for generating one-time passwords, and
a switching device (207) with which the device (201) for generating a one-time password and the display control logic (204) can be electrically connected temporarily and/or permanently with an energy source (206), wherein the switching device (207) is adapted such that it effects
- that during the generation of a one-time password the device (201) for generating one-time passwords is supplied with energy from the energy source (206),
- that the supply for the device (201) for generating one-time passwords with energy of the energy source (206) is interrupted as soon as the one-time password is generated and saved for being displayed on the display (203), and
- that during the display of the one-time password on the display (203) the display control logic (204) is supplied with energy of the energy source (206).

2. The data carrier according to claim 1, wherein the generated one-time password is a transaction number (TAN) for carrying out a secure electronic payment transaction via a personal account associated to an owner of the data carrier.

3. The data carrier according to claim 1 or 2, wherein the data carrier has the function of a payment transaction card (Eurocheque card, credit card, debit card), in which there are implemented pieces of information regarding a personal account associated to an owner of the data carrier and/or functionalities for carrying out secure electronic payment transactions via the personal account.

4. The data carrier according to any of claims 1 to 3, wherein the data carrier has the function of an electronic purse (CASH CARD).

5. The data carrier according to claim 4, wherein the display (203) is adapted to display pieces of information of the electronic purse, in particular the current credit balance of the electronic purse.

6. The data carrier according to any of claims 1 to 5, wherein the device for generating one-time passwords (TAN generator) is a microprocessor (208) or a part of a microprocessor (208).

7. The data carrier according to any of claims 1 to 6, which further has a display memory (209) connectable between the device (201) for generating one-time passwords and the display control logic (204), in which generated one-time passwords provided for being displayed on the display (203) are storable, so that with the help of the display control logic (204) they can be displayed directly from the display memory (209) onto the display (203).

8. The data carrier according to claim 7, wherein the one-time password is saved for being displayed on the display (203) as soon as the one-time password is stored in the display memory (209).

9. The data carrier according to claim 7 or 8, wherein the display memory (209) is a volatile memory which has a hold time that is sufficiently long, so that a one-time password displayed on the display (203) can be read from display (203).

10. The data carrier according to claim 9, wherein the hold time is at least one second, further preferably at least three seconds, further preferably at least five seconds.

11. The data carrier according to claim 7 or 8, wherein the display memory (209) is a volatile memory that is runnable in a retention mode, during which a memory content of the display memory (209) can be held under low power supply.

12. The data carrier according to claim 7 or 8, wherein the display memory (209) is a non-volatile memory.

13. The data carrier according to any of claims 1 to 12, wherein the switching device (207) is actuatable with the help of a manually actuatable energy operating unit (205), in particular a keyboard with at least one key or a touch contact switch.

14. The data carrier according to any of claims 1 to 13, which further has an energy source (206), in particular at least one battery and/or solar cell and/or piezoelectric element.

15. The data carrier according to any of claims 1 to 14, which further has an access check device, which permits the running of the data carrier for generating a one-time password only upon a successful input of a predetermined access identification key.

16. The data carrier according to claim 15, which further has an access operating unit for operating the access check device, in particular a keyboard with at least one key or a touch contact switch.

17. The data carrier according to claims 13 and 16 in connection, wherein the energy operating unit (205) and the access operating unit are formed by a common universal operating element.

18. The data carrier according to any of claims 1 to 17, which further has a biometric detection device for detecting biometric data.

19. The data carrier according to claim 18, which has a finger print sensor or/and a camera as a biometric detection device.

20. A method for running a data carrier (200), in particular chip card, according to any of claims 1 to 19, having a device (201) for generating one-time passwords and having a display (203) for displaying generated one-time passwords, wherein in the method a one-time password is generated with the device (201) for generating one-time passwords and the generated one-time password is displayed on the display (203), **characterized in that** a switching device of the data carrier effects that
- during the generation of the one-time password the device (201) for generating one-time passwords is supplied with energy from an energy source (206),
- during the display of the one-time password on the display (203) a display control logic (204) for driving the display (203), separated from the device (201) for generating one-time passwords, is supplied with energy from an energy source (206), and
- the supply for the device (201) for generating one-time passwords with energy of the energy source (206) is interrupted as soon as the one-time password is generated and saved for being displayed on the display (203).

21. The method according to claim 20, wherein the generation and display of the one-time password is effected by actuating an energy operating element (205), in particular a touch contact switch.

22. The method according to claim 20 or 21, wherein
- during the generation of the one-time password the data carrier (200) is partially or completely supplied with energy from an energy source located outside the data carrier.

23. The method according to any of claims 20 to 22, wherein
- during the generation of the one-time password the data carrier (200) is partially or completely supplied with energy from an energy source (206) located within the data carrier.

24. The method according to any of claims 20 to 23, wherein
- during the display of the one-time password on the display (203) the data carrier (200) is partially or completely supplied with energy from an energy source (206) located within the data carrier (200).

25. The method according to any of claims 20 to 24, wherein
- during the generation of the one-time password the device (201) for generating one-time passwords is supplied with energy from an energy source located outside the data carrier, and
- during the display of the one-time password on the display (203) a display control logic (204) for driving the display (203), separated from the device (201) for generating one-time passwords, is supplied with energy from an energy source (206) located within the data carrier.

26. The method according to any of claims 20 to 25, wherein a plurality of at least two one-time passwords is generated and stored in the data carrier, without a one-time password being displayed on the display in between.

27. The method according to any of claims 20 to 26, wherein before the generation of the one-time password a predetermined access identification key is input in an access check device, which permits the running of the data carrier (200) for generating a one-time password only upon a successful input of the access identification key.

28. A use of the method according to any of claims 20 to 27 upon the acknowledgement of a secure electronic payment transaction via a personal account, in particular bank account, of the owner of the data carrier (200) kept at a credit institution with the help of a transaction number (TAN), wherein
- a secure payment transaction is prompted, upon which, for it to be carried out, a subsequent acknowledgement by means of a transaction number (TAN) is required,
- a one-time password as a transaction number (TAN) for the acknowledgement of the payment transaction is generated and displayed on the display (203) of the data carrier (200),
- the transaction number (TAN) is read from the display (203) of the data carrier (200) and
- the payment transaction is acknowledged by providing the transaction number (TAN) to the credit institution.

29. A use of a one-time password for the authentication of an owner of the data carrier (200), generated according to the method according to any of claims 20 to 27.

## Revendications

1. Support de données (200), notamment carte à puce, notamment Smart Card, doté d'un dispositif (201) destiné à générer des mots de passe à usage unique et d'un écran (203) destiné à afficher des mots de passe à usage unique générés, **caractérisé en ce que** le support de données comporte en outre:
une logique de pilotage d'écran (204) configurée pour piloter l'écran (203) et pouvant fonctionner indépendamment du dispositif (201) destiné à générer des mots de passe à usage unique, la logique de pilotage d'écran (204) ayant une consommation d'énergie considérablement inférieure à celle du dispositif (201) destiné à générer des mots de passe à usage unique, et
un dispositif de commutation (207) avec lequel le dispositif (201) destiné à générer un mot de passe à usage unique et la logique de pilotage d'écran (204) peuvent être temporairement ou durablement couplés électriquement avec une source d'énergie (206), le dispositif de commutation (207) étant équipé de telle manière qu'il a pour effet
- que le dispositif (201) destiné à générer des mots de passe à usage unique est, pendant la génération d'un mot de passe à usage unique, alimenté en énergie provenant de la source d'énergie (206),
- que l'alimentation du dispositif (201) destiné à générer des mots de passe à usage unique en énergie provenant de la source d'énergie (206) est interrompue dès que le mot de passe à usage unique est généré et sauvegardé pour l'affichage sur l'écran (203), et
- que, pendant l'affichage du mot de passe à usage unique sur l'écran (203), la logique de pilotage d'écran (204) est alimentée en énergie provenant de la source d'énergie (206).

2. Support de données selon la revendication 1, le mot de passe à usage unique généré étant un numéro de transaction (TAN) destiné à l'exécution d'une transaction de paiement électronique sécurisée par l'intermédiaire d'un compte client associé au détenteur du support de données.

3. Support de données selon la revendication 1 ou 2, le support de données ayant la fonction d'une carte de paiement (carte EC, carte de crédit, carte de débit) dans laquelle des informations relative à un compte client associé à un détenteur du support de données et/ou des fonctionnalités destinées à l'exécution de transactions de paiement électronique sécurisées sont implémentées par l'intermédiaire du compte client.

4. Support de données selon une des revendications de 1 à 3, le support de données ayant la fonction d'un porte-monnaie électronique (carte prépayée).

5. Support de données selon la revendication 4, l'écran (203) étant configuré pour afficher des informations du porte-monnaie électronique, notamment l'avoir actuel du porte-monnaie électronique.

6. Support de données selon une des revendications de 1 à 5, le dispositif destiné à générer des mots de passe à usage unique (générateur TAN) étant un microprocesseur (208) ou une partie d'un microprocesseur (208).

7. Support de données selon une des revendications de 1 à 6, qui comporte en outre une mémoire d'affichage (209) qui peut être couplée entre le dispositif (201) destiné à générer des mots de passe à usage unique et la logique de pilotage d'écran (204) et dans laquelle des mots de passe à usage unique générés prévus pour l'affichage sur l'écran (203) peuvent être mémorisés, de telle sorte que, au moyen de la logique de pilotage d'écran (204), ils sont affichables sur l'écran (203) directement depuis la mémoire d'affichage (209).

8. Support de données selon la revendication 7, dans lequel, dès que le mot de passe à usage unique est mémorisé dans la mémoire d'affichage (209), le mot de passe à usage unique est sauvegardé pour l'affichage sur l'écran (203).

9. Support de données selon la revendication 7 ou 8, la mémoire d'affichage (209) étant une mémoire volatile qui a un temps de maintien qui est suffisamment long pour qu'un mot de passe à usage unique affiché sur l'écran (203) puisse être lu à partir de l'écran (203).

10. Support de données selon la revendication 9, le temps de maintien étant d'au moins une seconde, en outre de préférence au moins trois secondes, en outre de préférence au moins cinq secondes.

11. Support de données selon la revendication 7 ou 8, la mémoire d'affichage (209) étant une mémoire volatile pouvant fonctionner dans un mode rétention dans lequel un contenu de mémoire de la mémoire d'affichage (209) est maintenable à faible apport d'énergie.

12. Support de données selon la revendication 7 ou 8, la mémoire d'affichage (209) étant une mémoire non volatile.

13. Support de données selon une des revendications de 1 à 12, le dispositif de commutation (207) étant actionnable au moyen d'un dispositif de commande d'énergie (205) actionnable manuellement, notamment un clavier pourvu d'au moins une touche ou un bouton-poussoir.

14. Support de données selon une des revendications de 1 à 13, qui comporte en outre une source d'énergie (206), notamment au moins une pile et/ou une cellule solaire et/ou un élément piézoélectrique.

15. Support de données selon une des revendications de 1 à 14, qui comporte en outre un dispositif de contrôle d'accès qui ne rend possible le fonctionnement du support de données destiné à générer un mot de passe à usage unique qu'à la suite d'une entrée aboutie d'un identificateur d'accès prédéterminé.

16. Support de données selon la revendication 15, qui comporte en outre un dispositif de commande d'accès destiné à la commande du dispositif de contrôle d'accès, notamment un clavier pourvu d'au moins une touche ou un bouton-poussoir.

17. Support de données selon les revendications 13 et 16 en relation, le dispositif de commande d'énergie (205) et le dispositif de commande d'accès étant constitués par un élément universel commun de commande.

18. Support de données selon une des revendications de 1 à 17, qui comporte en outre un dispositif de saisie biométrique destiné à la saisie de données biométriques.

19. Support de données selon la revendication 18, qui comporte en tant que dispositif de saisie biométrique un capteur d'empreintes digitales et/ou une caméra.

20. Procédé de fonctionnement d'un support de données (200), notamment carte à puce, selon une des revendications de 1 à 19, comportant un dispositif (201) destiné à générer des mots de passe à usage unique et un écran (203) destiné à afficher des mots de passe à usage unique générés, un mot de passe à usage unique étant généré dans ce procédé au moyen du dispositif (201) destiné à générer des mots de passe à usage unique ; et le mot de passe à usage unique généré étant affiché sur l'écran (203), **caractérisé en ce qu'**un dispositif de commutation du support de données a pour effet que
- pendant la génération du mot de passe à usage unique, le dispositif (201) destiné à générer des mots de passe à usage unique est alimenté en énergie provenant d'une source d'énergie (206),
- pendant l'affichage du mot de passe à usage unique sur l'écran (203), une logique de pilotage d'écran (204) pour piloter l'écran (203) distincte du dispositif (201) destiné à générer des mots de passe à usage unique est alimentée en énergie provenant de la source d'énergie (206), et
- l'alimentation du dispositif (201) destiné à générer des mots de passe à usage unique en énergie provenant de la source d'énergie (206) est interrompue dès que le mot de passe à usage unique est généré et sauvegardé pour l'affichage sur l'écran (203).

21. Support de données selon la revendication 20, la génération et l'affichage du mot de passe à usage unique étant déclenché par un actionnement d'un élément de commande d'énergie (205), notamment d'un bouton-poussoir.

22. Procédé selon la revendication 20 ou 21, dans lequel
- pendant la génération du mot de passe à usage unique, le support de données (200) est alimenté partiellement ou entièrement en énergie provenant d'une source d'énergie située à l'extérieur du support de données.

23. Procédé selon une des revendications de 20 à 22, dans lequel
- pendant la génération du mot de passe à usage unique, le support de données (200) est alimenté partiellement ou entièrement en énergie provenant d'une source d'énergie (206) située à l'intérieur du support de données.

24. Procédé selon une des revendications de 20 à 23, dans lequel
- pendant l'affichage du mot de passe à usage unique sur l'écran (203), le support de données (200) est alimenté partiellement ou entièrement en énergie provenant d'une source d'énergie (206) située à l'intérieur du support de données (200).

25. Procédé selon une des revendications de 20 à 24, dans lequel
- pendant la génération du mot de passe à usage unique, le dispositif (201) destiné à générer des mots de passe à usage unique est alimenté en énergie provenant d'une source d'énergie située à l'extérieur du support de données, et
- pendant l'affichage du mot de passe à usage unique sur l'écran (203), une logique de pilotage d'écran (204) distincte du dispositif (201) destiné à générer des mots de passe à usage unique est, pour piloter l'écran (203), alimentée en énergie provenant d'une source d'énergie (206) située à l'intérieur du support de données.

26. Procédé selon une des revendications de 20 à 25, dans lequel une pluralité d'au moins deux mots de passe à usage unique est générée et mémorisée dans le support de données sans qu'un mot de passe à usage unique ne soit affiché entre-temps sur l'écran.

27. Procédé selon une des revendications de 20 à 26, dans lequel, avant la génération du mot de passe à usage unique, un identificateur d'accès prédéterminé est entré dans un dispositif de contrôle d'accès qui ne rend possible le fonctionnement du support de données (200) destiné à générer un mot de passe à usage unique qu'à la suite d'une entrée aboutie de l'identificateur d'accès.

28. Utilisation du procédé selon une des revendications de 20 à 27 lors de la validation d'une transaction de paiement électronique sécurisée par l'intermédiaire d'un compte client entretenu auprès d'un établissement de crédit, notamment compte bancaire, du détenteur du support de données (200), au moyen d'un numéro de transaction (TAN),
- une transaction de paiement sécurisée étant engagée, pour laquelle, pour qu'elle soit exécutée, une validation subséquente au moyen d'un numéro de transaction (TAN) est nécessaire,
- un mot de passe à usage unique en tant que numéro de transaction (TAN) est, pour la validation de la transaction de paiement, généré et affiché sur l'écran (203) du support de données (200),
- le numéro de transaction (TAN) est lu à partir de l'écran (203) du support de données (200) et
- la transaction de paiement est validée, ce qui a lieu en ce que le numéro de transaction (TAN) est mis à disposition de l'établissement de crédit.

29. Utilisation d'un mot de passe à usage unique généré suivant le procédé selon une des revendications de 20 à 27 pour l'authentification d'un détenteur du support de données (200).
